# EUROPÄISCHE PATENTSCHRIFT

(11) **EP 1 813 005 B1**
(45) Veröffentlichungstag und Bekanntmachung des Hinweises auf die Patenterteilung: **11.05.2011**
(21) Anmeldenummer: 05811152.7
(22) Anmeldetag: 16.11.2005
(51) Int. Cl.: H02B 11/133

(54) **VERRIEGELUNGSVORRICHTUNG UND EINSCHUBRAHMEN MIT EINER VERRIEGELUNGSVORRICHTUNG**
LOCKING DEVICE AND WITHDRAWABLE RACK PROVIDED WITH SAID LOCKING DEVICE
DISPOSITIF DE VERROUILLAGE ET CADRE ENFICHABLE POURVU D'UN DISPOSITIF DE VERROUILLAGE

(30) Priorität: 19.11.2004 DE 102004056725
(43) Veröffentlichungstag der Anmeldung: 01.08.2007
(73) Patentinhaber: SIEMENS AKTIENGESELLSCHAFT, 80333 München (DE)
(72) Erfinder: BOHNEN, Peter, 13437 Berlin (DE)
(86) Internationale Anmeldenummer: PCT/EP2005/056013
(87) Internationale Veröffentlichungsnummer: WO 2006/053881

(56) Entgegenhaltungen:
- US-A1- 2004 112 722

## Beschreibung

Die Erfindung liegt auf dem Gebiet der elektrischen Schalter und bezieht sich auf eine Verriegelungsvorrichtung für einen in einem Einschubrahmen mittels einer Betätigungswelle verschiebbar geführten elektrischen Schalter, die bei in einer Vorzugstellung, insbesondere einer Trennstellung befindlichen Schalter aus einer Freigabe-Position, bei der der Schalter im Einschubrahmen verschiebbar ist, in eine Verriegelungs-Position überführbar ist, wobei die Verriegelungsvorrichtung in der Verriegelungs-Position ein Verschieben des Schalters im Einschubrahmen in einer vorgegebenen Richtung sperrt und wobei die Betätigungswelle über eine Betätigungskurbel betätigbar ist.

Die Erfindung bezieht sich weiterhin auf einen Einschubrahmen mit einer derartigen Verriegelungsvorrichtung.

Eine gattungsgemäße Verriegelungsvorrichtung und ein gattungsgemäßer Einschubrahmen sind beispielsweise aus der Druckschrift EP 0 842 556 B1 bekannt.

Ausgehend von dieser bekannten Verriegelungsvorrichtung liegt der Erfindung die Aufgabe zugrunde, die Verriegelung des Schalters in seiner Vorzugsstellung noch sicherer zu gestalten.

Diese Aufgabe wird gemäß der Erfindung dadurch gelöst, dass die Verriegelungsvorrichtung in die Verriegelungs-Position nur überführbar ist, wenn die Betätigungskurbel gegen Betätigung gesperrt ist. Durch eine derartige Gestaltung wird das Betätigen der Betätigungskurbel zusätzlich verhindert. Somit wird auf vorteilhafte Weise die Gefahr einer Beschädigung der Mechanik der Verriegelungsvorrichtung durch die hohen Hebelkräfte, die über die Betätigungskurbel auf die Betätigungswelle wirken ausgeräumt.

Eine bevorzugte Ausgestaltung der neuen Verriegelungsvorrichtung sieht vor, dass ein Mittel zur Abfrage der Stellung des Schalters vorgesehen ist, das bei in der Vorzugsstellung befindlichem Schalter aus einer Offen-Stellung in eine Sperr-Stellung nur überführbar ist, wenn die Betätigungskurbel gegen Betätigung gesperrt ist.

In weiterer bevorzugter Ausgestaltung weist die Verriegelungsvorrichtung folgende Elemente auf:
- zum Sperren der Verschiebung des Schalters ein mit dem Mittel zur Abfrage der Stellung des Schalters gekoppeltes Mittel zum Sperren der Betätigungswelle,
- zum Sperren der Betätigung der Betätigungskurbel ein aus einer Frei-Lage in eine Sperr-Lage überführbares Betätigungselement (Sperrschieber),
- zum Abtasten der Position des Sperrschiebers ein aus einer der Sperr-Lage des Sperrschiebers entsprechenden ersten Position in eine der Frei-Lage des Sperrschiebers entsprechenden zweiten Position überführbares Tastmittel und
- zum Sperren des Mittels zur Abfrage der Stellung des Schalters ein mittels Koppelstrang mit dem Tastmittel gekoppeltes erstes Sperrmittel,
- wobei das erste Sperrmittel das Überführen des Mittels zur Abfrage der Stellung des Schalters in seine Sperr-Stellung nur freigibt, wenn sich der Sperrschieber in seiner Sperr-Stellung befindet.

In weiterer Ausgestaltung ist vorgesehen, dass das Tastmittel auf einem mittels des Schalters verschiebbaren Schlitten gelagert ist.

Weiterhin kann mit Vorteil ein Rückhaltemittel vorgesehen sein, dass bei aus dem Einschubrahmen entnommenem Schalter das Tastmittel in seiner der Sperr-Lage des Sperrschiebers entsprechenden ersten Position hält.

Vorteilhaft ist es, wenn das Mittel zur Abfrage der Stellung des Schalters in seiner Sperr-Stellung blockierbar ist. Bevorzugt dient hierzu ein Schließzylinder, der mittels eines Seilzugs mit dem Mittel zur Abfrage der Stellung des Schalters gekoppelt ist.

Um bei einmal aus dem Einschubrahmen entnommenem Schalter ein erneutes Einschieben eines Schalters in den Einschubrahmen zu verhindern, ist ein zweites Sperrmittel vorgesehen, das bei in seiner Sperrstellung blockiertem Mittel zur Abfrage der Stellung des Schalters nach der Entnahme des Schalters aus dem Einschubrahmen in die in Richtung der Vorzugsstellung weisende Bewegungsbahn des Schalters schwenkt.

Die neue Verriegelungsvorrichtung ist bevorzugt dem Einschubrahmen zugeordnet und hierzu insbesondere mittels eines Tragbleches unterhalb des elektrischen Schalters am Einschubrahmen angeordnet.

Eine gemäß der Erfindung ausgebildete Verriegelungsvorrichtung ist in den Figuren 1 bis 11 dargestellt. Dabei zeigen:
- Figur 1: eine Frontseite einer Schaltzelle mit einem Ein- schubrahmen in dem ein Niederspannungs- Leistungsschalter angeordnet ist,
- Figur 2: einen Fahrantrieb des Niederspannungs- Leistungsschalters mit Sicht auf eine Betätigungs- kurbel, die auf eine Betätigungswelle aufgesteckt ist und die mittels eines Betätigungselementes (Sperrschiebers) sperrbar ist,
- Figur 3: den Fahrantrieb gemäß der Figur 2 mit Sicht auf ei- ne Sperrklinke, mittels der die Betätigungswelle blockierbar ist,
- Figur 4: eine perspektivische Darstellung des Einschubrah- mens mit der erfindungsgemäßen Verriegelungsvor- richtung, die unterhalb des Niederspannungs- Leistungsschalter am Boden des Einschubrahmens an- geordnet ist,
- Figur 5: die erfindungsgemäße Verriegelungsvorrichtung in Draufsicht,
- Figur 6: die erfindungsgemäße Verriegelungsvorrichtung mit Sicht auf ihre Unterseite,
- Figur 7: den Einschubrahmen mit der Verriegelungsvorrichtung in einer unverriegelten ersten Stellung bei aus dem Einschubrahmen entnommenem Schalter
- Figuren 8: bis 11 weitere charakteristische Stellungen der Verriegelungsvorrichtung und
- Figur 12: eine besondere Ausgestaltung eines Mittels zum Sperren der Betätigungswelle

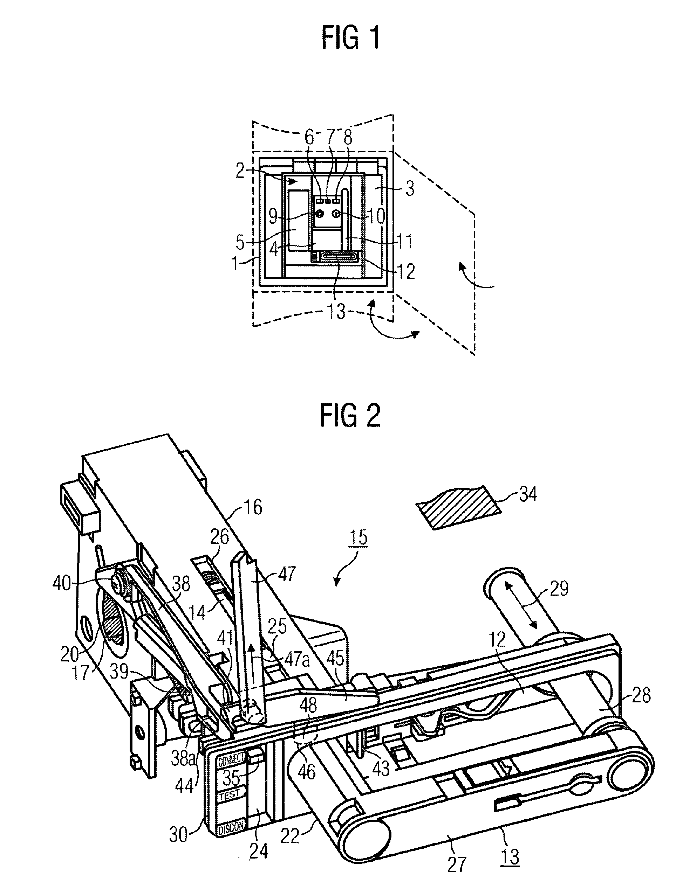

Gemäß der Figur 1 ist in einer Schaltzelle eines Schaltschrankes oder einer Schaltanlage ein Einschubrahmen 1 angeordnet, wobei ein Niederspannungs-Leistungsschalter 2 in dem Einschubrahmen 1 in bekannter Weise verfahrbar angeordnet ist. Der in dem Einschubrahmen 1 eingefahrene Niederspannungs-Leistungsschalter 2 weist ein Gehäuse 3 zur Aufnahme einer Schaltpolbaugruppe und ein an der Vorderseite des Gehäuses 3 befestigtes die Frontseite des Schalters bildendes Bedienpult 4 auf, mittels dessen ein Schalt-Antrieb und weitere Teile des Schalters abgedeckt werden. Am Bedienpult 4 sind ein Überstromauslöser 5, Bedien- und Anzeigeelemente 6 bis 10, ein Handaufzugshebel 11 zum Spannen eines Federspeichers des Schalt-Antriebes sowie eine in eine Aufnahmetasche 12 versenkbare Betätigungskurbel 13 zum Betätigen einer Betätigungswelle 14 eines Fahrantriebes 15 angeordnet.

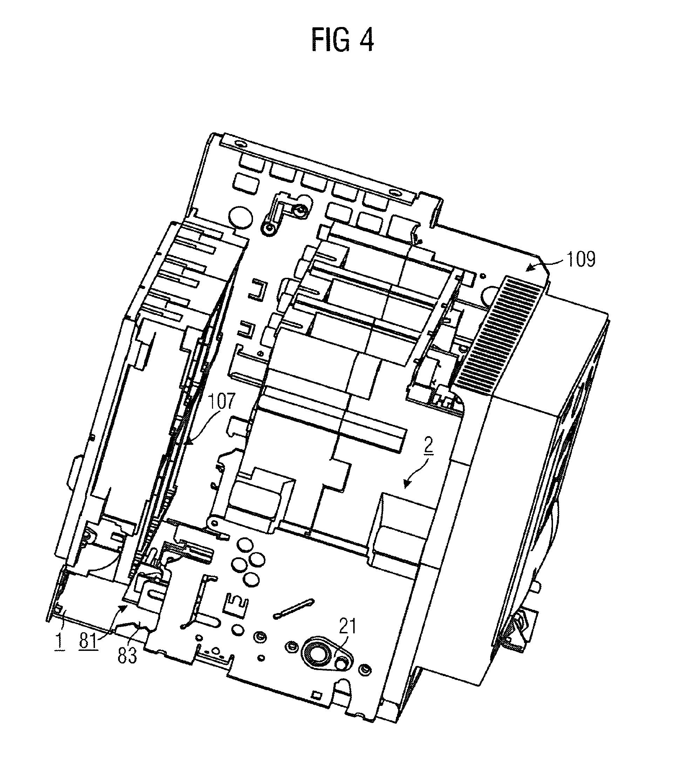

Gemäß der Figur 2 weist der Fahrantrieb 15 ein Gehäuse 16 auf, das zweckmäßig aus zwei schalenartigen Hälften zusammengesetzt sein kann, zwischen denen Getriebeteile und weitere Komponenten angeordnet sind. Eine mittels der Betätigungskurbel 13 ausgeübte Drehbewegung wird mittels der Betätigungswelle 14 in eine Drehung einer Fahrwelle 17 umgesetzt. Hierzu ist auf der Betätigungswelle 14 eine Schnecke angeordnet, die mit einem Getrieberad in Eingriff steht. Die Längsachsen der Betätigungswelle 14 und der Fahrwelle 17 stehen rechtwinklig zueinander. Die Fahrwelle 17 ist nicht fest mit dem Fahrantrieb 15 verbunden, sondern ist in einer Profilöffnung 20 des Getrieberades verschiebbar, die dem Profil der Fahrwelle 17 angepasst ist. Auf diese Weise ist der Fahrantrieb 15 für Leistungsschalter unterschiedlicher Größe verwendbar und ist nicht an eine bestimmte Position entlang der Fahrwelle 17 gebunden. An den Enden der Fahrwelle 17 sind in bekannter Weise Fahrkurbeln 21 (vgl. Figur 4) angebracht, die etwa in der Weise mit ortsfesten Teilen zusammenwirken, wie dies beispielsweise schematisch in der DE 44 20 580 C1 oder der DE 44 20 581 C1 (jeweils Figur 1) gezeigt ist. Gleichfalls nicht dargestellt ist die Befestigung des Fahrantriebes 15 an einem Leistungsschalter, da dies dem Fachmann vertraut ist.

Zum Drehen der in dem Gehäuse 16 gelagerten Betätigungswelle 14 dient, wie schon erwähnt, eine Betätigungskurbel 13, die im Unterschied zu anderen bekannten Fahrantrieben (vgl. die genannten DE 44 20 580 C1 und DE 44 20 581 C1) von der Betätigungswelle 14 nicht abnehmbar ist, sondern Bestandteil des Fahrantriebes 15 ist. Die Betätigungskurbel 13 weist einen hohlen Schaft 22 auf, der mit einem freies Ende der Betätigungswelle 14 drehschlüssig gekoppelt und auf der Betätigungswelle 14 verschiebbar ist.
Der hohle Schaft 22 trägt einen Führungszapfen 25, der in eine am Gehäuse 16 vorgesehene Führungsnut 26 eingreift. Da die Führungsnut 26 dem Führungszapfen 25 angepasst ist, kann der Schaft 22 entlang der Führungsnut 26 verschoben werden, jedoch ohne Möglichkeit der Drehung. Diese wird erst dann freigegeben, wenn der Schaft 22 ganz nach vorn herausgezogen ist, wo in dem Gehäuse 16 die Führungsnut 26 in eine Ringnut mündet. Unter "Ringnut" sind in diesem Zusammenhang auch anders geformte Ausnehmungen des Gehäuses 16 zu verstehen, die eine freie Drehung des Schaftes 22 ermöglichen.

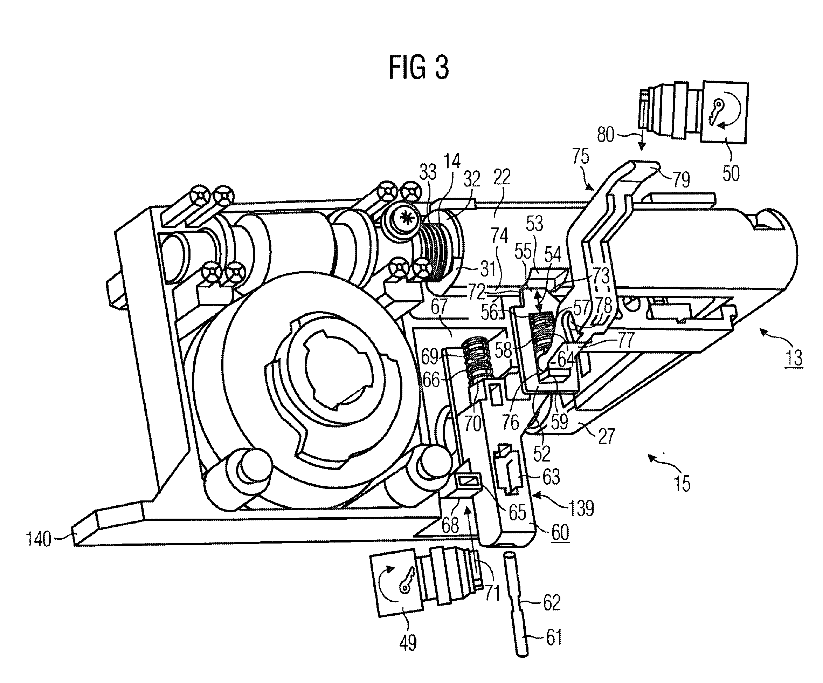

Die Betätigungskurbel 13 umfasst neben dem Schaft 22 einen mit dem Schaft 22 verbundenen (oder einstückig mit diesem hergestellten) Kurbelarm 27, an dessen Ende sich eine Öffnung zur Aufnahme eines Griffstückes 28 befindet. Das Griffstück 28 ist in der genannten Öffnung in der Richtung eines Feiles 29 parallel zu dem Schaft 22 verschiebbar und kann aus der eingeschobenen Ruhestellung gemäß der Figur 3 vom Benutzer in eine herausgezogene Arbeitsstellung überführt werden.

In der Ruhestellung ist die Betätigungskurbel 13 in der Aufnahmetasche 12 also bündig versenkt unterzubringen. Die Aufnahmetasche 12 gehört zu einem Bedienpulteinsatz 30 (vgl. Figuren 1 und 2), der am unteren Rand des Bedienpultes 4 des Leistungsschalters 2 angeordnet ist. Beim Einschieben der Betätigungskurbel 13 in ihre Ruhestellung gelangt eine Stirnfläche 31 (vgl. Figuren 3) am Ende des Schaftes 22 zur Anlage an einem Stützring 32, der durch eine Anschlagfeder 33 belastet ist. Die Anschlagfeder 33 ist eine Schraubendruckfeder, die auf der Betätigungswelle 14 sitzt. Anschließend schiebt der Benutzer das Griffstück 28 durch die im Kurbelarm 27 befindliche Öffnung bis zur Bündigstellung mit dem Kurbelarm 27. Das innere Ende des Griffstückes 28 liegt dann an einem Anschlag 34 an.

In dieser eingeschobenen Ruhestellung hat der Benutzer an sich keine Möglichkeit, den Kurbelarm zu ergreifen, weil die Kontur der Aufnahmetasche 12 dem Kurbelarm 27 mit Schaft 22 und Griffstück 28 angepasst ist. Dennoch ist bei Bedarf ein rascher Zugriff gewährleistet. Dies geschieht dadurch, dass die Tiefe der Aufnahmetasche um ein gewisses Maß größer bemessen ist, als es die Unterbringung der genannten Teile erfordert. Der Benutzer kann deshalb den Kurbelarm 27 gegen die Kraft der Anschlagfeder 33 etwas in die Aufnahmetasche hineindrücken. An dieser Bewegung kann jedoch das Griffstück 28 wegen der Anlage an dem festen Anschlag 34 nicht teilnehmen und steht nun um den gleichen Betrag aus dem Kurbelarm 27 hervor. Der Benutzer kann nun das Griffstück 28 und anschließend den Kurbelarm 27 mit Schaft 22 herausziehen.

In ähnlicher Weise wie bei bekannten Fahrantrieben ist neben der Betätigungskurbel 13 ein Anzeigefenster 24 angeordnet, in dem ein Anzeigemittel 35 für die betriebliche Stellung des Leistungsschalters in seinem Einschubrahmen sichtbar ist. Diese Stellungen - Betriebstellung, Teststellung und Trennstellung - beziehen sich bekanntlich auf die relative Stellung von beweglichen Haupttrennkontakten und Hilfstrennkontakten und damit bei gegebener Anordnung dieser Trennkontakte auf die Position des Leistungsschalters 2 im zugehörigen Einschubrahmen 1. Aufgrund des Eingreifens der Fahrkurbeln 21 (vgl. Figur 4) an den Enden der Fahrwelle 17 in eine ortsfeste Führung des Einschubrahmens 1 bildet somit die Winkelstellung des Getrieberades ein zuverlässiges Merkmal für die genannten Stellungen.

Für die Zwecke der Anzeigevorrichtung ist daher an einer Stirnseite des nicht gezeigten Getrieberades eine Steuerkurve angeordnet, an der ein Taststift eines zweiarmigen Anzeigehebels 38 unter der Wirkung einer Zugfeder 39 anliegt. Der um eine Lagerschraube 40 schwenkbare Anzeigehebel 38 überträgt somit die Steuerkurve in eine vom Benutzer im Anzeigefenster 24 (vgl. Figur 2) wahrnehmbare Stellung des Anzeigemittels 35. Hierbei ist es wesentlich, dass der Benutzer bei der Betätigung der Betätigungskurbel 13 das Erreichen der genannten Stellungen gut erkennen kann. Zu diesem Zweck ist die Steuerkurve mit Abschnitten unterschiedlicher Steigung versehen, die so gestaltet sind, dass das Anzeigemittel 35 jeweils kurz nach dem Verlassen einer der genannten Stellungen eine Zwischenstellung einnimmt und dann erst kurz vor dem Erreichen der folgenden Stellung auf diese zeigt. Durch die relativ nahe bei der Steuerkurve gelegene Lagerschraube 40 des Anzeigehebels 38 werden relativ kleine Auslenkungen in gut sichtbare Bewegungen des Anzeigemittels 35 im Anzeigefenster 24 übersetzt.

Durch einen Rastschieber 41, der durch eine Vorspannfeder belastet ist, wird der Schaft 22 gegen ein unbeabsichtigtes Einschieben in das Gehäuse 16 geschützt. Der Rastschieber 41 ist im vorderen Teil des Gehäuses 16 geführt und wirkt gleichfalls mit der Stirnfläche 31 am inneren Ende des Schaftes 22 zusammen. Beim Herausziehen des Schaftes 22 in seine Arbeitsstellung springt der Rastschieber 41 hinter die Stirnfläche 31 und sperrt damit das Einschieben des Schaftes 22. Um den Schaft 22 zum Einschieben freizugeben, steht dem Benutzer eine Betätigungsnase 43 zur Verfügung, die so angeordnet ist, dass sie in die Aufnahmetasche 12 hineinragt und daher nur bei herausgezogener Betätigungskurbel 13 zugänglich ist.

Eine zusätzliche Funktion hat der Rastschieber 41 in der mittleren Position (Teststellung) des Fahrantriebes 15. Diese äußert sich für den Benutzer im Unterschied zu der Betriebsstellung und Trennstellung nicht durch einen fühlbaren Widerstand an der Betätigungskurbel durch das Erreichen von Endanschlägen. Damit der Benutzer dennoch die Betätigungskurbel 13 nur beim genauen Erreichen der Teststellung einschieben kann, ist der Rastschieber 41 mit einer Zunge 44 versehen, die seitlich am Gehäuse 16 heraustritt, wenn die Betätigungsnase 43 bedient wird und eine im Anzeigehebel 38 angeordnete Fensteröffnung 38a der Zunge 44 gegenübersteht.

Um dem Benutzer den Zugang zur Betätigungskurbel 13 zu verwehren, ist bei in der Aufnahmetasche 12 versenktem Kurbelarm 27 der Schaft 22 der Betätigungswelle durch einen ersten Sperrmechanismus axial fixierbar. Dies geschieht durch ein als Sperrhebel 45 ausgebildetes erstes Sperrelement in Verbindung mit einer im Schaft 22 der Betätigungskurbel angeordneten in axialer Richtung des Schalters begrenzten Sperrnut 46. Der Sperrhebel 45 steht dabei sinngemäß mit einem als Sperrschieber 47 ausgebildeten ersten Betätigungselement in Verbindung, wie dies in der DE 44 20 580 C1 beschrieben ist. Bestehen die Voraussetzungen dafür, dass der Fahrantrieb 15 für den Benutzer gefahrlos betätigt werden kann, so wird der Sperrhebel 45 durch den Sperrschieber 47 entsprechend einem in der Figur 1 gezeigten Feil 47a angehoben, wobei eine Sperrnase 48 des Sperrhebels 45 aus der Sperrnut 46 des Schaftes 22 herausgezogen wird. Umgekehrt ist die Einschaltung des Leistungsschalters 2 erst möglich, wenn die Betätigungskurbel 13 wieder in ihre Ruhestellung in der Aufnahmetasche 12 eingeschoben ist und somit die Sperrnase 48 am Sperrhebel 45 wieder in die Sperrnut 46 eintreten kann.

Gemäß der Figur 3 weist der Fahrantrieb 15 einen zweiten Sperrmechanismus zum Sperren des Betätigens der Betätigungswelle 14 auf. Dieser zweite Sperrmechanismus dient dazu, ein Verfahren des Schalters im Einschubrahmen mittels Zylinderschlösser 49, 50 zu verhindern. Auch dieser zweite Sperrmechanismus fixiert den Schaft 22 der Betätigungskurbel 13 in seiner axialen Richtung 24, wenn der zweite Sperrmechanismus zum Sperren aktiviert ist und wenn der Kurbelarm 27 der Betätigungskurbel in der Aufnahmetasche 12 versenkt ist. Dies geschieht durch ein als Sperrklinke 52 ausgebildetes zweites Sperrelement in Verbindung mit einer im Schaft 22 der Betätigungskurbel angeordneten zweiten Sperrnut 53, die ebenfalls in axialer Richtung 24 des Schaftes 22 begrenzt ist. Die Sperrklinke 52 ist als Metall-Stanzteil ausgebildet und an Anschlagflächen am Fahrantrieb in Richtung des Feiles 54 senkrecht zum Schaft 22 verschiebbar geführt. Sie weist neben einer Sperrnase 55, die an der dem Schaft 22 zugewandten Seite angeformt ist, eine fensterartige Öffnung 56 auf, von dessen einer Innenwand eine parallel zur Verschiebungsrichtung 54 der Sperrklinke verlaufende erster Haltezapfen 57 für eine Vorspannfeder 58 angeformt ist. In die fensterartige Öffnung 56 der Sperrklinke 52 ragt ein erster Arm 59 eines in Verschiebungsrichtung 54 der Sperrklinke verschiebbar am Fahrantrieb gehaltenen zweiten Betätigungselementes 60. Zur Halterung dieses zweiten Betätigungselementes 60 an dem Fahrantrieb 15 dient ein zylindrischer Stift 61 der senkrecht zur Verschiebungsrichtung 54 verlaufende Innenwände des Betätigungselementes 60 und diesen Wänden gegenüberliegende Befestigungslaschen des Fahrantriebes im Bereich entsprechender Durchgangsbohrungen durchgreift. Zur axialen Fixierung des eingeschobenen Stiftes, weist der Stift einen verjüngten Abschnitt 62 auf, in den eine federnde Nase 63 des Betätigungselementes 60 einschnappt. Zur Demontage des Betätigungselementes 60 kann diese Nase 63 mittels eines Schraubendrehers oder eines vergleichbar schmalen Werkzeuges aus dem verjüngten Abschnitt 62 des Stiftes 61 herausgehoben und damit der Stift zum Herausziehen freigegeben werden.

An dem ersten Arm 59 des zweiten Betätigungselementes 60 ist ein zweiter Haltezapfen 64 für die Vorspannfeder 58 angeformt. Ein zweiter Arm 65 des Betätigungselementes 60 liegt unter der Kraft einer Rückstellfeder 66, die an einer ersten Stützfläche 67 einer der Gehäusehälften des Fahrantriebes abgestützt ist, an einer zweiten Stützfläche 68 dieser Gehäusehälfte an. Zur Führung der Rückhaltefeder 66 ist die eine Stützfläche 67 und das Betätigungselement 60 mit jeweils einem Haltezapfen 69, 70 versehen. Zur Steuerung des Betätigungselementes 60 dient ein erstes schematisch dargestelltes Zylinderschloss 49. Beim Schließen dieses ersten Zylinderschlosses 49 wirkt eine nicht dargestellte Nase in Richtung des Feiles 71 auf den zweiten Arm 65 und verschiebt das Betätigungselement 60 und die über die Vorspannfeder 58 an das Betätigungselement 60 gekoppelte Sperrklinke 52 entgegen der Kraft der Rückstellfeder 66 aus einer AUS-Stellung in eine EIN-Stellung in Richtung des Schaftes 22 der Betätigungskurbel. Bei vollständig eingeschobenem Schaft 22, d. h. bei in seiner Aufnahmetasche versenktem Kurbelarm 27, steht die zweite Sperrnut 53 des Schaftes 22 der Sperrnase 55 der Sperrklinke 52 gegenüber, so dass diese in die Sperrnut 53 eintauchen kann. Beim Versuch, den Kurbelarm 27 aus der Aufnahmetasche 12 herauszuziehen, gelangt die eine Seitenfläche der Sperrnut 53 in Anlage mit einer Anschlagfläche 72 der Sperrnase 55 und signalisiert damit dem Bedienpersonal, dass eine Sperrung des Fahrantriebes vorliegt. Hierbei genügt bereits ein leichter Widerstand, um die Sperrung des Fahrantriebes zu signalisieren. Das zweite Betätigungselement 60 ist im Unterschied zu dem ersten Betätigungselement 47 (Sperrschieber) des ersten Sperrmechanismus auch dann aus seiner AUS-Stellung in seine EIN-Stellung verschiebbar, wenn der Kurbelarm 27 nicht oder noch nicht vollständig in der Aufnahmetasche 12 versenkt ist. Bei vollständig herausgezogenem Schaft 22 wird die Sperrklinke 52 beim Anheben des Betätigungselementes 60 ebenfalls angehoben und ragt damit in die Bewegungsbahn des Schaftes 22. Beim Hereinschieben des Schaftes gleitet die Stirnfläche 31 des Schaftes 22 über eine Gleitfläche 73 der Sperrnase 55 der Sperrklinke und drückt die Sperrklinke 52 entgegen der Kraft der Vorspannfeder 58 aus der Bewegungsbahn des Schaftes heraus. Danach gleitet die Sperrnase 55 bis zu ihrem Einrasten in die Sperrnut 53 auf einem abgeflachten Mantelabschnitt 74 des Schaftes entlang.

Zur alternativen Betätigung der Sperrklinke 52 ist das zweite Betätigungselement mit einem als zweiarmiger Hebel ausgebildeten dritten Betätigungselement 75 gekoppelt. Zur Ankopplung weist das zweite Betätigungselement 60 am freien Ende seines ersten Armes 59 eine U-förmige Ausnehmung 76 auf, in die ein erster Arm 77 des zweiarmigen Hebels eingreift. Dieser zweiarmige Hebel ist um eine nicht dargestellte ortsfeste Lagerschraube, die eine Bohrung 78 des dritten Betätigungselementes 75 durchgreift, drehbar. Der zweite Hebelarm 79 des dritten Betätigungselementes 75 ist mittels einer Klinke des Zylinderschlosses 50 in Richtung des Feiles 80 betätigbar.

Gemäß der Figur 4 ist die erfindungsgemäße Verriegelungsvorrichtung 81 unterhalb des Niederspannungs-Leistungsschalters 2 am Boden des Einschubrahmens 1 befestigt.

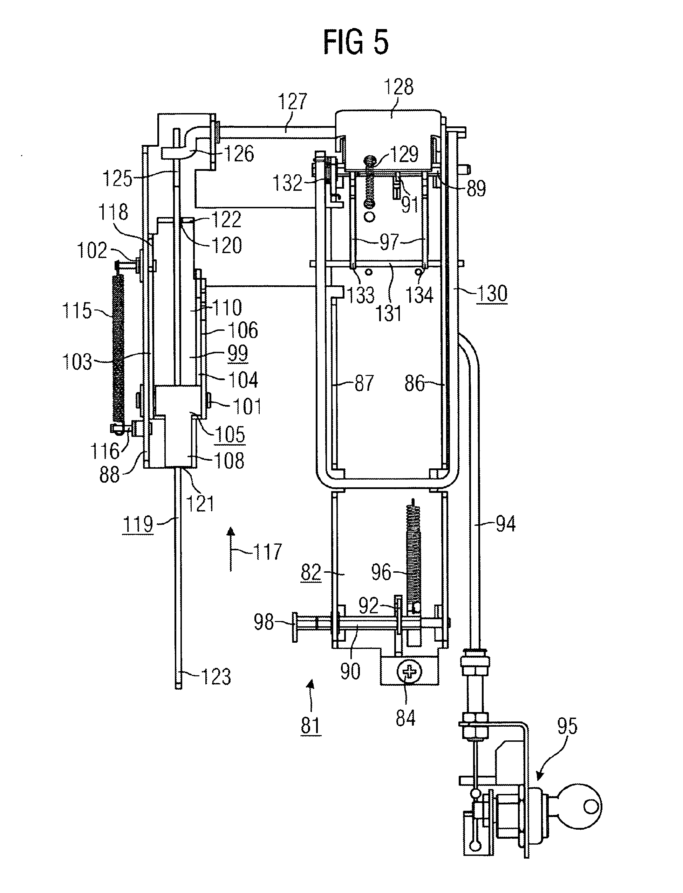

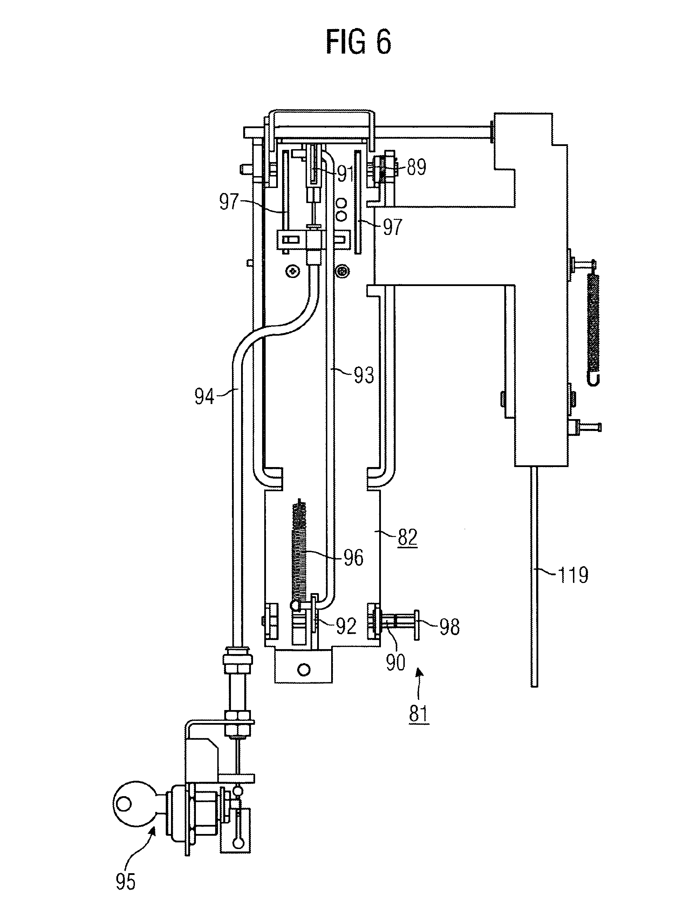

Gemäß der Figuren 5 und 6 weist die Verriegelungsvorrichtung 81 ein Tragblech 82 auf, das an einer Seite mit einer in den Figuren nicht sichtbaren Abkantung den Boden 83 des Einschubrahmens durchgreift und das an seiner gegenüberliegenden Seite mittels eines Befestigungsmittels 84 in Form einer Schraube am Boden 83 des Einschubrahmens befestigt ist. Das Tragblech 82 weist senkrecht zu seiner Bodenfläche 85 abgebogene Stützflächen 86, 87, 88 auf, die zur Halterung und Führung weiterer Elemente der Verriegelungsvorrichtung dienen.

So sind an einer ersten 86 und einer zweiten 87 abgebogenen Stützfläche zwei Sechskantbolzen 89, 90 drehbar gelagert, auf denen jeweils ein Hebel 91, 92 drehfest gehaltert ist. Die beiden Hebel 91, 92 sind durch ein Gestänge 93 verbunden. An dem einen Hebel 91 greift ein Seilzug 94 an, der mittels eines weiteren Zylinderschlosses 95 betätigbar ist. Das Gestänge 93 ist durch eine zweite Rückstellfeder 96 beaufschlagt, die die beiden Hebel 91, 92 und damit die beiden Bolzen 89, 90 bei unverriegeltem Zylinderschloss 95 in einer Ruheposition hält.

Während auf dem einen der Sechskantbolzen 89 ein Mittel 97 zur Abfrage der Stellung des Schalters in Form zweier Anschlaghebel drehfest gehalten ist, ist der andere der beiden Hebel 92 mit einem Mittel 98 zum Sperren der Betätigungswelle 14 in Form einer Nockenscheibe versehen. Dabei wirkt die Nockenscheibe in Richtung des Feiles 71 auf den zweiten Arm 65 des zweiten Betätigungselementes 60 (vgl. Fig 3). In der Ruheposition des Gestänges 93 befinden sich das Mittel 97 zur Abfrage der Stellung des Schalters und das Mittel 98 zum Sperren der Betätigungswelle 14 in einer Offen-Stellung, die der unbetätigten AUS-Stellung des zweiten Betätigungselementes 60 entspricht.

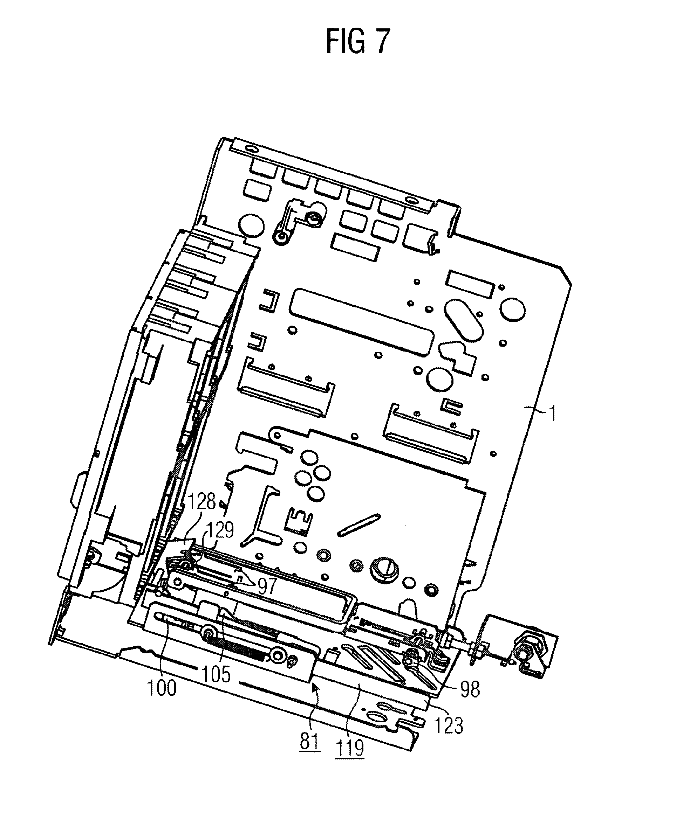

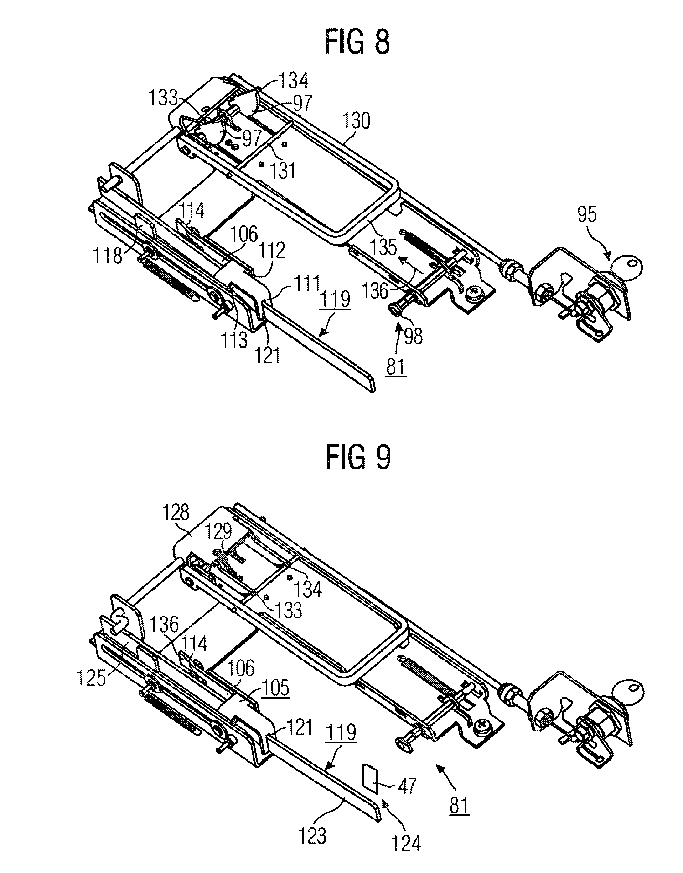

An der dritten abgebogenen Stützfläche 88 ist ein U-förmig gebogener Schlitten 99 verschiebbar gehalten. Hierzu ist die dritte Stützfläche 88 mit einem Langloch 100 (vgl. Figur 7) versehen, in dem zwei mit dem Schlitten 99 verbundene Bolzen 101, 102 verschiebbar geführt sind. Dabei durchgreift der eine der beiden Bolzen 101 die beiden parallel zu der dritten Stützfläche verlaufenden seitlichen Führungsflächen 103, 104 des U-förmig gebogener Schlittens. Auf diesem Bolzen 101 ist ein Rückhaltemittel 105 in Form eines zweiarmigen Hebels schwenkbar gelagert. Dabei erstreckt sich der eine Hebelarm 106 in Form einer parallel zu den Führungsflächen des U-förmig gebogenen Schlittens verlaufenden Abkantung (vgl. Figur 8) in Richtung einer Rückwand 107 des Einschubrahmens 1 (vgl. Figur 4). Der zweite Hebelarm 108, der sich in Richtung der offenen Seite 109 (vgl. Figur 4) des Einschubrahmens 1 in einer Ebene erstreckt, die im Wesentlichen parallel zum Boden 110 des U-förmig gebogen Schlittens verläuft, weist an seinem freien Ende eine in Richtung des Bodens 110 weisende Abkantung 111 (vgl. Figur 8) auf. Zur schwenkbaren Lagerung des Rückhaltemittels 105 auf dem Bolzen 101 dienen zwei parallel zu den Führungsflächen des U-förmig gebogenen Schlittens verlaufende Lagerarme 112, 113 (vgl. Figur 8), die einen Abstand derart aufweisen, dass die Außenweite des Rückhaltemittels an die Innenweite des U-förmig gebogenen Schlittens angepasst ist. Zwischen dem Boden 110 des Schlittens 99 und dem freien Ende des ersten Hebelarmes 106 ist eine dritte als Schraubendruckfeder ausgebildete Rückstellfeder 114 abgestützt. Der zweite 102 der Bolzen dient als erstes Widerlager für eine vierte als Zugfeder ausgebildete Rückstellfeder 115, deren zweites Widerlager von einem Stift 116 gebildet ist. Der Stift 116 ragt dabei in Einschubrichtung 117 dem ersten Bolzen 101 vorgelagert von der nach außen weisenden dritten Stützfläche 88 ab. Die dieser dritten Stützfläche 88 gegenüberstehende Führungsfläche 103 des U-förmig gebogenen Schlittens 99 weist eine in die Bewegungsbahn des Niederspannungs-Leistungsschalters 2 ragende Nase 118 auf, die dazu dient, den Schlitten 99 beim Erreichen einer bestimmten Einschubstellung mit dem Schalter mitzuführen.

Zwischen dem Schlitten 99 und dem Rückhaltemittel 105 ist ein Tastmittel 119 in Form eines weiteren zweiarmigen Hebels schwenkbar auf dem ersten Bolzen 101 gelagert. Dieses Tastmittel 119 dient zum Abtasten der Position des Betätigungselementes 47(des Sperrschiebers). Zur axialen Positionierung des Tastmittels 119 dienen zwei Führungsschlitze 120, 121, von denen ein erster 120 in einer hinteren Abkantung 122 des Schlittens 99 und der zweite 121 in dem zweiten Hebelarm 108 des Rückhaltemittels 105 und in dessen Abkantung 111 vorgesehen sind. Während die nach oben weisende Kante des Endes des einen Hebelarmes 123 des Tastmittels 119 einer Betätigungsfläche 124 (vgl. Figur 9) des ersten Betätigungselementes 47 (Sperrschieber) gegenübersteht, liegt an der nach oben weisende Kante des freien Endes des anderen Hebelarmes 125 eine Kurve 126 eines Hebelgetriebes 127 an. Auf dem Hebelgetriebe 127 ist ein erstes Sperrmittel 128 in Form einer U-förmig gebogenen Sperrklappe drehfest gehaltert. Die Sperrklappe wird von einer fünften Rückstellfeder 129 in einer Ruhestellung gehalten, in der sie die zwei Anschlaghebel, die das Mittel zur Abfrage der Stellung des Schalters 97 bilden, übergreift und dadurch in ihrer Offen-Stellung (vgl. Figur 9) hält.

Der Sechskantbolzen 89 trägt zusätzlich zu dem Mittel 97 zur Abfrage der Stellung des Schalters ein zweites Sperrmittel 130 in Form einer rahmenartigen Klappe, die mittels einer Kante 131 unter der Kraft einer zweiten Vorspannfeder 132 an Haltenasen 133, 134 der beiden Anschlaghebel anliegt.

Die Figur 7 zeigt die Verriegelungsvorrichtung 81 in ihrer unverriegelten Feigabe-Position bei aus dem Einschubrahmen entnommenem Schalter. Hierbei befindet sich das Mittel 98 (Nockenscheibe) zum Sperren der Betätigungswelle 14 in seiner AUS-Stellung und das Mittel 97 (Anschlaghebel) zur Abfrage der Stellung des Schalters 97 in seiner Offen-Stellung. Aufgrund dessen, dass sich kein Niederspannungs-Leistungsschalter im Einschubrahmen befindet, wirkt auch kein erstes Betätigungselement (Sperrschieber) auf den einen Hebelarm 123 des Tastmittels 119. Dabei sind die Kräfte der fünften Rückstellfeder 129, die an dem ersten Sperrmittel 128 (Sperrklappe) angreift, und der dritten Rückstellfeder 114 (vgl. Figur 5), die an dem Rückhaltemittel 105 angreift, so bemessen, dass der erste Hebelarm 123 des Tastmittels 119 in eine der Sperr-Lage des ersten Betätigungselementes 47 (Sperrschiebers) entsprechende erste Position nach unten geschwenkt ist und das erste Sperrmittel 128 (Sperrklappe) daher derart nach oben geschwenkt ist, dass das Mittel 97 zur Abfrage der Stellung des Schalters zum Überführen in seine Sperr-Stellung freigegeben ist.

Die Figur 8 zeigt die Verriegelungsvorrichtung 81 in ihrer verriegelten Verriegelungs-Position bei aus dem Einschubrahmen entnommenem Schalter. Im Unterschied zu der Position, wie sie in der Figur 7 dargestellt ist, ist hier durch das Betätigen des Zylinderschlosses 95 das Mittel 97 zur Abfrage der Stellung des Schalters (Anschlaghebel) in seine Sperr-Stellung überführt. Hierbei ist das zweite Sperrmittel 130 (rahmenartige Klappe) von den Haltenasen 133, 134 der Anschlaghebel freigegeben und daher so nach oben geschwenkt, dass eine vordere Kante 135 in die in Einschubrichtung weisende Bewegungsbahn 136 des Schalters ragt. Damit ist nach dem Herausnehmen eines Schalters aus dem Einschubrahmen das erneute Einsetzen eines Schalters bei verriegelter Verriegelungsvorrichtung verhindert. In dieser Verriegelungs-Position befindet sich das Mittel 98 zum Sperren der Betätigungswelle 14 in einer Stellung, bei der das Betätigungselement 60 so angehoben ist, dass sich die Sperrklinke 52 in ihrer EIN-Stellung befindet und der Schaft 22 in seiner axialen Richtung blockiert.

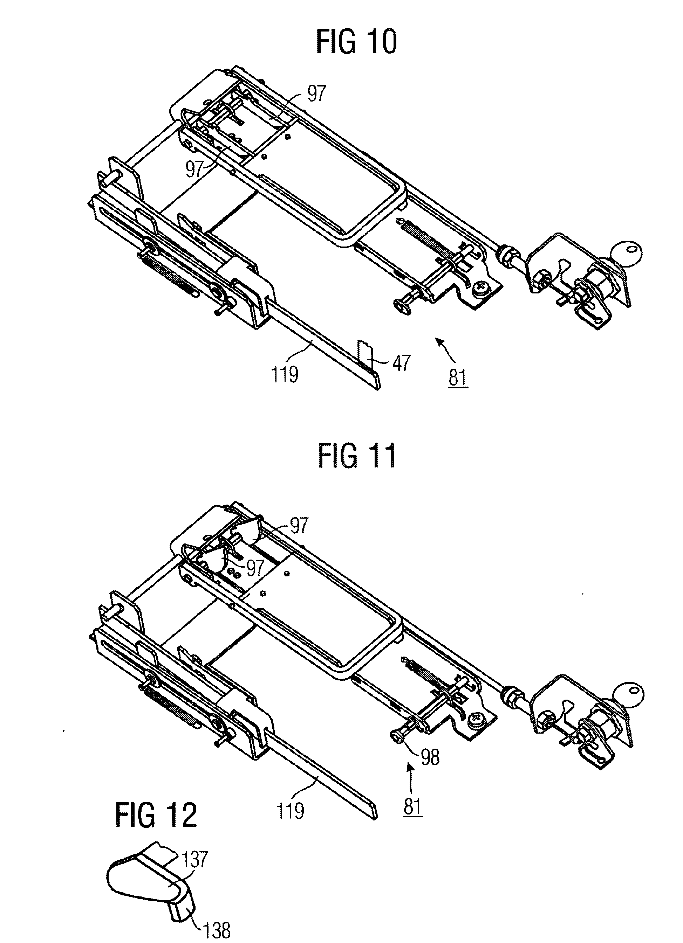

Alternativ zu dem zweiten Sperrmittel kann ein drittes Sperrmittel, das mit dem Mittel 97 zur Abfrage der Stellung des Schalters gekoppelt ist, derart vorgesehen sein, dass bei in der Verriegelungs-Position befindlicher Verriegelungsvorrichtung auch eine Entnahme eines Schalters aus dem Einschubrahmen verhindert ist. Hierzu ist gemäß der Figur 12 an dem als Nockenscheibe ausgebildeten Mittel 137 zum Sperren der Betätigungswelle zusätzlich eine senkrecht zur Bewegungsbahn des Schalters verlaufende Abkantung 138 vorgesehen, die bei im Einschubrahmen in Trennstellung befindlichen Schalter und in ihrer Verriegelungs-Position befindlicher Verriegelungsvorrichtung einer Anschlagfläche 139 des zweiten Betätigungselementes 60 gegenübersteht und somit ein Herausnehmen des Schalters sperrt. Die gleiche Abkantung 138 steht bei in ihrer Verriegelungs-Position befindlicher Verriegelungsvorrichtung einer Anschlagfläche 140 (vgl. Figur 3) des Gehäuses 16 des Fahrantriebes 15 eines Schalters 1 gegenüber, wenn versucht wird, den Schalter 1 bei in ihrer Verriegelungs-Position befindlicher Verriegelungsvorrichtung in den Einschubrahmen einzuschieben und verhindert damit das Einschieben.

Die Figur 9 zeigt die Verriegelungsvorrichtung 81 in ihrer Freigabe-Position, in der sie nicht verriegelbar ist, da sich der Niederspannungs-Leistungsschalter in einer Zwischenstellung außerhalb der bevorzugten Trennstellung befindet. Bei dieser Zwischenstellung befindet sich das erste Betätigungselement 47 in seiner Frei-Lage, d.h. in seiner nach oben verschobenen Lage, da die bevorzugte Stellung, nämlich die Trennstellung des Schalters im Einschubrahmen noch nicht erreicht ist. Der Hebelarm 106 des Rückhaltemittels 105 ist von dem eingeschobenen Schalter derart geschwenkt und die Federkraft der dritten Rückstellfeder 114 derart blockiert, dass das erste Sperrmittel 128 und der Hebelarm 125 unter der Kraft der fünften Rückstellfeder 129 in ihrer Ruhestellung gehalten werden, bei der das Mittel 97 zur Abfrage der Stellung des Schalters (Anschlaghebel) in seiner Offen-Stellung blockiert ist.
An dem Hebelarm 106 des Rückhaltemittels 105 ist ein Nocken 136 derart ausgebildet, dass sich das Tastmittel 119 und das erste Betätigungselement 47 (Sperrschieber) unabhängig von der Lage des ersten Betätigungselementes 47 sicher zuordnen.

Die Figur 10 zeigt die Verriegelungsvorrichtung 81 bei in Trennstellung befindlichem Schalter in ihrer unverriegelten Freigabe-Position, bei der jedoch das Mittel 97 zur Abfrage der Stellung des Schalters zum Überführen in seine Sperr-Stellung freigegeben ist. Diese Freigabe wurde durch das Überführen das ersten Betätigungselementes 47 (Sperrschieber) in seine Sperr-Lage - d.h. durch Absenken des Sperrschiebers - bewirkt. Ein derartiges Absenken des Sperrschiebers ist - wie bereits dargelegt wurde - jedoch nur möglich, wenn der Kurbelarm 27 vollständig in der Aufnahmetasche 12 versenkt und damit ein Betätigen der Betätigungskurbel 13 verhindert ist (vgl. Figur 2).

Die Figur 11 zeigt die Verriegelungsvorrichtung 81 bei in Trennstellung befindlichem Schalter in ihrer Verriegelungs-Position, bei der das Mittel 97 zur Abfrage der Stellung des Schalters aus seiner Offen-Stellung (vgl. Figur 10) in seine Sperr-Stellung überführt ist. In seiner Sperr-Stellung ragt das Mittel 97 in die Bewegungsbahn des Schalters, so dass ein weiteres Verfahren des Schalters über seine Trennstellung hinaus in Richtung der Test- und Betriebsstellung blockiert ist.
Auch hier ist durch die Drehung des Mittels 98 (Nockenscheibe) zum Sperren der Betätigungswelle ein Überführen des Sperrklinke 52 in ihre EIN-Stellung bewirkt, so dass auch hier der Schaft 22 in seiner axialen Richtung blockiert ist.

## Patentansprüche

1. Verriegelungsvorrichtung (81) für einen in einem Einschubrahmen (1) mittels einer Betätigungswelle (14) verschiebbar geführten elektrischen Schalter (2), die bei in einer Vorzugsstellung, insbesondere einer Trennstellung befindlichem Schalter aus einer Freigabe-Position, bei der der Schalter im Einschubrahmen verschiebbar ist, in eine Verriegelungs-Position überführbar ist,
wobei die Verriegelungsvorrichtung (81) in der Verriegelungs-Position ein Verschieben des Schalters im Einschubrahmen in einer vorgegebenen Richtung (117) sperrt,
wobei die Betätigungswelle (14) über eine Betätigungskurbel (13) betätigbar ist, die Betätigungskurbel (13) ist von der Betätigungswelle (14) nicht abnehmbar, sondern Bestandteil des Fahrantriebes (15),
**dadurch gekennzeichnet, dass** die Verriegelungsvorrichtung in die Verriegelungs-Position nur überführbar ist, wenn die Betätigungskurbel (13) gegen Betätigung gesperrt ist.

2. Verriegelungsvorrichtung nach Anspruch 1,
**dadurch gekennzeichnet,**
**dass** ein Mittel (97) zur Abfrage der Stellung des Schalters (2) vorgesehen ist, das bei in der Vorzugsstellung befindlichem Schalter aus einer Offen-Stellung in eine Sperr-Stellung nur überführbar ist, wenn die Betätigungskurbel (13) gegen Betätigung gesperrt ist.

3. Verriegelungsvorrichtung nach Anspruch 2,
**dadurch gekennzeichnet, dass**
zum Sperren der Verschiebung des Schalters (2) ein mit dem Mittel (97) zur Abfrage der Stellung des Schalters gekoppeltes Mittel (98) zum Sperren der Betätigungswelle (14),
zum Sperren der Betätigung der Betätigungskurbel (13) ein aus einer Frei-Lage in eine Sperr-Lage überführbares Betätigungselement (47),
zum Abtasten der Position des Betätigungselementes (47) ein aus einer der Sperr-Lage des Betätigungselementes entsprechenden ersten Position in eine der Frei-Lage des Betätigungselementes entsprechenden zweiten Position überführbares Tastmittel (119) und
zum Sperren des Mittels (97) zur Abfrage der Stellung des Schalter ein mittels Koppelstrang mit dem Tastmittel (119) gekoppeltes erstes Sperrmittel (128) vorgesehen sind,
wobei das erste Sperrmittel (128) das Überführen des Mittels (97) zur Abfrage der Stellung des Schalters in seine Sperr-Stellung nur freigibt, wenn sich das Betätigungselement (47) in seiner Sperr-Stellung befindet.

4. Verriegelungsvorrichtung nach Anspruch 3,
**dadurch gekennzeichnet, dass**
das Tastmittel (119) auf einem mittels des Schalters (2) verschiebbaren Schlitten (99) gelagert ist.

5. Verriegelungsvorrichtung nach einem der Ansprüche 3 oder 4,
**dadurch gekennzeichnet, dass**
dass ein Rückhaltemittel (105) vorgesehen ist, das bei aus dem Einschubrahmen (1) entnommenem Schalter (2) das Tastmittel (119) in seiner der Sperr-Lage des Betätigungselementes (47) entsprechenden ersten Position hält.

6. Verriegelungsvorrichtung nach einem der Ansprüche 2 bis 5,
**dadurch gekennzeichnet, dass**
das Mittel (97) zur Abfrage der Stellung des Schalters in seiner Sperr-Stellung blockierbar ist.

7. Verriegelungsvorrichtung nach Anspruch 6,
**dadurch gekennzeichnet, dass**
zur Blockierung des Mittels (97) zur Abfrage der Stellung des Schalters in seiner Sperr-Stellung ein Schließzylinder (95) dient, der mittels Seilzug (94) mit dem Mittel (97) zur Abfrage der Stellung des Schalters gekoppelt ist.

8. Verriegelungsvorrichtung nach Anspruch 6,
**dadurch gekennzeichnet, dass**
dass ein zweites Sperrmittel (130) vorgesehen ist, das bei in seiner Sperr-Stellung blockiertem Mittel (97) zur Abfrage der Stellung des Schalters bei Entnahme des Schalters (2) aus dem Einschubrahmen (1) in die in Richtung der Vorzugsstellung weisende Bewegungsbahn des Schalters schwenkt.

9. Verriegelungsvorrichtung nach Anspruch 6,
**dadurch gekennzeichnet, dass**
dass ein drittes Sperrmittel (138) vorgesehen ist, das beim Überführen des Mittels (97) zur Abfrage der Stellung des Schalters in seine Sperr-Stellung in die Bewegungsbahn des Schalters schwenkt.

10. Einschubrahmen (1) mit einer Verriegelungsvorrichtung (81) für einen in den Einschubrahmen mittels einer Betätigungswelle (14) verschiebbar geführten elektrischen Schalter (2),
**dadurch gekennzeichnet, dass**
die Verriegelungsvorrichtung (81) nach einem der Ansprüche 1 bis 9 ausgebildet ist.

11. Einschubrahmen nach Anspruch 10
**dadurch gekennzeichnet, dass**
die Verriegelungseinrichtung (81) ein Tragblech (82) zur Anordnung der Verriegelungsvorrichtung am Einschubrahmen (1) unterhalb des Schalters (2) aufweist.

## Claims

1. Locking device (81) for an electrical switch (2), which is guided displaceably in a withdrawable rack (1) by means of an actuating shaft (14) and which, with the switch located in a preferred position, in particular an isolating position, can be moved from a release position, in which the switch is displaceable in the withdrawable rack, into a locking position, the locking device (81) in the locking position blocking a displacement of the switch in the withdrawable rack in a predetermined direction (117),
the actuating shaft (14) being capable of being actuated via an actuating crank (13), wherein the actuating crank (13) cannot be removed from the actuating shaft (14), but is part of the traveling drive (15),
**characterized in that** the locking device can only be moved into the locking position if the actuating crank (13) is blocked against actuation.

2. Locking device according to Claim 1,
**characterized**
**in that** a means (97) for querying the position of the switch (2) is provided which, with the switch located in the preferred position, can only be moved from an open position into a blocking position if the actuating crank (13) is blocked against actuation.

3. Locking device according to Claim 2,
**characterized in that**
a means (98) for blocking the actuating shaft (14), which means (98) is coupled to the means (97) for querying the position of the switch, is provided in order to block the displacement of the switch (2),
an actuating element (47), which can be moved from a free position into a blocking position, is provided in order to block the actuation of the actuating crank (13),
a sensing means (119), which can be moved from a first position, which corresponds to the blocking position of the actuating element, into a second position, which corresponds to the free position of the actuating element, is provided in order to sense the position of the actuating element (47), and
a first blocking means (128), which is coupled to the sensing means (119) by means of a coupling section, is provided in order to block the means (97) for querying the position of the switch,
the first blocking means (128) only releasing the means (97) for querying the position of the switch such that it can be moved into its blocking position if the actuating element (47) is located in its blocking position.

4. Locking device according to Claim 3,
**characterized in that**
the sensing means (119) is mounted on a carriage (99) which can be displaced by means of the switch (2).

5. Locking device according to either of Claims 3 and 4,
**characterized in that**
a restraining means (105) is provided which, with the switch (2) removed from the withdrawable rack (1), keeps the sensing means (119) in its first position, which corresponds to the blocking position of the actuating element (47).

6. Locking device according to one of Claims 2 to 5,
**characterized in that**
the means (97) for querying the position of the switch can be stopped in its blocking position.

7. Locking device according to Claim 6,
**characterized in that**
a locking cylinder (95), which is coupled to the means (97) for querying the position of the switch by means of a cable pull (94), is used for stopping the means (97) for querying the position of the switch in its blocking position.

8. Locking device according to Claim 6,
**characterized in that**
a second blocking means (130) is provided which, with the means (97) for querying the position of the switch stopped in its blocking position and once the switch (2) has been removed from the withdrawable rack (1), pivots into the movement path of the switch which points in the direction of the preferred position.

9. Locking device according to Claim 6,
**characterized in that**
a third blocking means (138) is provided which, when the means (97) for querying the position of the switch is moved into its blocking position, pivots into the movement path of the switch.

10. Withdrawable rack (1) with a locking device (81) for an electrical switch (2), which is guided displaceably in the withdrawable rack by means of an actuating shaft (14),
**characterized in that** the locking device (81) is designed according to one of Claims 1 to 9.

11. Withdrawable rack according to Claim 10,
**characterized in that**
the locking device (81) has a bearing plate (82) for arranging the locking device on the withdrawable rack (1) beneath the switch (2).

## Revendications

1. Dispositif (81) de verrouillage d'un commutateur ( 2 ) électrique guidé, de manière à pouvoir coulisser, au moyen d'un arbre (14) d'actionnement dans un cadre de baie, dispositif qui, lorsque le commutateur se trouve dans une position préférée, notamment dans une position de séparation, peut passer d'une position de libération, dans laquelle le commutateur peut coulisser dans le cadre de baie, à une position de verrouillage,
dans lequel le dispositif ( 81 ) de verrouillage bloque, dans la position de verrouillage, un coulissement du commutateur dans le cadre de baie dans une direction ( 117 ) prescrite,
dans lequel l'arbre (14) d'actionnement peut être actionné par une manivelle (13) d'actionnement, la manivelle ( 13 ) d'actionnement ne pouvant pas être enlevée de l'arbre ( 14 ) d'actionnement, mais faisant partie du mécanisme ( 15 ) de déplacement,
**caractérisé en ce que** le dispositif de verrouillage ne peut passer dans la position de verrouillage, que si la manivelle (13) d'actionnement est bloquée à l'actionnement.

2. Dispositif de verrouillage suivant la revendication 1,
**caractérisé en ce qu'**il est prévu un moyen ( 97 ) pour demander la position du commutateur ( 2 ), qui ne peut passer, lorsque le commutateur se trouve dans la position préférée, d'une position ouverte à une position fermée, que si la manivelle (13) d'actionnement est bloquée à l'actionnement.

3. Dispositif de verrouillage suivant la revendication 2,
**caractérisé en ce que**, pour bloquer le déplacement du commutateur ( 2 ), il est prévu, couplé au moyen ( 97 ) de demande de la position du commutateur, un moyen ( 98 ) de blocage de l'arbre ( 14 ) d'actionnement,
il est prévu, pour bloquer l'actionnement de la manivelle ( 13 ) d'actionnement, un élément (47) d'actionnement pouvant passer d'une position libre à une position bloquée, il est prévu, pour détecter la position de l'élément ( 47 ) d'actionnement, un moyen ( 119 ) de détection pouvant passer d'une première position correspondant à la position de blocage de l'élément d'actionnement à une deuxième position correspondant à la position libre de l'élément d'actionnement et
il est prévu, pour bloquer le moyen ( 97 ) de demande de la position du commutateur, un premier moyen ( 128 ) de blocage couplé au moyen ( 119 ) de détection par une corde d'accouplement,
dans lequel le premier moyen ( 128 ) de blocage ne libère le passage du moyen ( 97 ) de demande de la position du commutateur dans sa position de blocage, que si l'élément ( 47 ) d'actionnement se trouve dans sa position de blocage.

4. Dispositif de verrouillage suivant la revendication 3,
**caractérisé en ce que** le moyen ( 119 ) de détection est monté sur un chariot ( 99 ) pouvant coulisser au moyen du commutateur ( 2 ).

5. Dispositif de verrouillage suivant l'une des revendications 3 ou 4,
**caractérisé en ce qu'**il est prévu un moyen ( 105 ) de retenue qui, lorsque le commutateur ( 2 ) est retiré du cadre ( 1 ) de baie, maintient le moyen ( 119 ) de détection dans sa première position correspondant à la position de blocage de l'élément ( 47 ) d'actionnement.

6. Dispositif de verrouillage suivant l'une des revendications 2 à 5,
**caractérisé en ce que** le moyen ( 97 ) de demande de la position du commutateur peut être bloqué dans sa position de blocage.

7. Dispositif de verrouillage suivant la revendication 6,
**caractérisé en ce que**, pour le blocage du moyen ( 97 ) de demande de la position du commutateur dans sa position de blocage, on se sert d'un vérin ( 95 ) de fermeture, qui est couplé au moyen d'un câble ( 94 ) de traction au moyen ( 97 ) de demande de la position du commutateur.

8. Dispositif de verrouillage suivant la revendication 6,
**caractérisé en ce qu'**il est prévu un deuxième moyen ( 130 ) de blocage qui, lorsque le moyen ( 97 ) de demande de la position du commutateur est bloqué dans sa position de blocage, vient en pivotant, lorsque le commutateur ( 2 ) est retiré du cadre ( 1 ) de baie, dans la voie de déplacement du commutateur allant dans la direction de la position préférée.

9. Dispositif de verrouillage suivant la revendication 6,
**caractérisé en ce qu'**il est prévu un troisième moyen ( 138 ) de blocage qui, lorsque le moyen ( 97 ) de demande de la position du commutateur passe dans sa position de blocage, vient en pivotant dans sa position de blocage dans la voie de déplacement du commutateur.

10. Cadre ( 1 ) de baie ayant un dispositif ( 81 ) de verrouillage pour un commutateur ( 2 ) électrique guidé, de manière à pouvoir coulisser, au moyen d'un arbre (14) d'actionnement dans le cadre de baie,
**caractérisé en ce que**
le dispositif ( 81 ) de verrouillage est constitué suivant l'une des revendications 1 à 9.

11. Cadre suivant la revendication 10,
**caractérisé en ce que**
le dispositif ( 81 ) de verrouillage comporte une tôle ( 82 ) support pour le montage du dispositif de verrouillage sur le cadre (1) de baie en dessous du commutateur ( 2 ).
